(19) Europäisches Patentamt
European Patent Office
Office européen des brevets

(11) Veröffentlichungsnummer: **0 066 167**
**B1**

# (12) EUROPÄISCHE PATENTSCHRIFT

(45) Veröffentlichungstag der Patentschrift: **27.03.85**

(21) Anmeldenummer: **82104292.6**

(22) Anmeldetag: **17.05.82**

(51) Int. Cl.[4]: **C 08 G 18/38**, C 08 G 18/10, C 08 G 18/75, C 08 G 59/66, C 08 L 63/00, C 09 D 3/72, C 09 K 3/10

## (54) Verfahren zur Herstellung von Mercaptogruppen aufweisenden Oligourethanen, sowie ihre Verwendung als Bindemittel für oxidativ härtbare Beschichtungs- und Dichtungsmassen bzw. als Zusatzmittel für Epoxidharze.

(30) Priorität: **29.05.81 DE 3121384**

(43) Veröffentlichungstag der Anmeldung: **08.12.82 Patentblatt 82/49**

(45) Bekanntmachung des Hinweises auf die Patenterteilung: **27.03.85 Patentblatt 85/13**

(84) Benannte Vertragsstaaten: **BE DE FR GB IT NL**

(56) Entgegenhaltungen:
**FR - A - 1 525 806**
**FR - A - 1 601 407**

(73) Patentinhaber: **BAYER AG, Konzernverwaltung RP Patentabteilung, D-5090 Leverkusen 1 Bayerwerk (DE)**

(72) Erfinder: **Wellner, Wolfgang, Dr., Hahnenweg 8, D-5000 Köln 80 (DE)**
Erfinder: **Pedain, Josef, Dr., Haferkamp 6, D-5000 Köln 80 (DE)**
Erfinder: **Gruber, Hermann, Dr., Paul-Klee-Strasse 87, D-5090 Leverkusen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



BUNDESDRUCKEREI BERLIN

**Beschreibung**

Die vorliegende Erfindung betrifft ein neues Verfahren zur Herstellung von Mercaptogruppen aufweisenden Oligourethanen aus ausgewählten Ausgangsmaterialien sowie die Verwendung der Verfahrensprodukte als Bindemittel für oxidativ härtbare Beschichtungs- und Dichtungsmassen bzw. als Zusatzmittel für Epoxidharze.

Oligomere und Polymere, die SH-Gruppen enthalten und die sich deshalb durch Oxidation mit Oxidationsmitteln wie $MnO_2$, $PbO_2$, Chromaten oder organischen Peroxiden oder auch in Gegenwart von bestimmten Katalysatoren durch Luft zu gummiartigen, elastischen Kunststoffen aushärten lassen, sind bereits mehrmals beschrieben worden. Auch die Verwendung dieser Bindemittel zur Herstellung von Dichtungs-, Versiegelungs- und Beschichtungsmassen ist bekannt (z. B. DE-OS 2 739 117, DE-OS 2 557 088, DE-AS 2 363 856).

Der wesentliche Vorteil dieser Bindemittel gegenüber anderen Substanzklassen (wie z. B. Oligourethanen mit NCO-Endgruppen) besteht u. a. in der Tatsache, daß sie auch in Gegenwart von Wasser, das durch feuchte Pigmente oder Zusatzstoffe oder aus der Atmosphäre hinzukommen kann, aushärten und blasenfreie Polymere bilden.

Andererseits haben Oligourethane mit freien NCO-Gruppen, die als Bindemittel für Dichtungs- und Beschichtungsmassen eingesetzt werden, neben dem Nachteil der Bildung von Blasen bei der Aushärtung mit Wasser (d. h. Luftfeuchtigkeit) mehrere Vorteile: Sie eignen sich z. B. zur Herstellung sehr witterungsbeständiger Massen mit hoher Dauerelastizität, hoher Zähigkeit, mit gutem Abriebwiderstand und Beständigkeit gegenüber Lösemitteln und anderen chemischen Einflüssen.

Es hat deshalb nicht an Versuchen gefehlt, die wertvollen Eigenschaften der Polyurethane mit dem Aushärtungsmechanismus über Mercapto-Gruppen zu verknüpfen. Besonders in der DE-OS 1 770 259 werden Oligourethane mit Mercaptoendgruppen beschrieben. Sie werden hergestellt, indem man zunächst ein Polyol mit überschüssigem Diisocyanat zu einem NCO-Gruppen enthaltenden Prepolymer umsetzt und dieses danach mit einem Alkohol, der eine HS-Gruppe enthält, urethanisiert. Man erhält auf diesem Wege gemäß DE-OS 1 770 259 Oligourethane mit Mercapto-Endgruppen, die blasenfrei ohne Schäumen auch in Gegenwart von Feuchtigkeit oxidativ aushärten.

Die Verfahrensprodukte der DE-OS 1 770 259 weisen allerdings noch Nachteile auf, die ihre Verwendung für hochwertige Abdichtungs- und Beschichtungsmassen erschweren oder unmöglich machen. Vor allem sind die Produkte gegen Vergilbung sehr anfällig, da überwiegend aromatische Diisocyanate für ihre Herstellung Verwendung finden. Bei weiß oder hell pigmentierten Beschichtungsmassen spielt die bekannte Vergilbung dieser Isocyanate eine sehr nachteilige, wertmindernde Rolle. Obwohl auch aliphatische Diisocyanate als geeignet genannt werden und in einem Beispiel ein aliphatisches Diisocyanat eingesetzt wird, führen diese Ausgangsprodukte (wie auch nachstehend in Vergleichsversuchen gezeigt wird) keineswegs zu optimal geeigneten Abdichtungs- und Beschichtungsmassen. Besonders nachteilig ist bei der Verwendung von aliphatischen Diisocyanaten gemäß DE-OS 1 770 259 die hohe Oberflächenklebrigkeit der ausreagierten Massen. Genau die gleiche Feststellung rechtfertigt sich im Hinblick auf US-PS 3 446 780. Auch die Autoren dieser Vorveröffentlichung erkannten nicht, wie lichtechte Abdichtungs- und Beschichtungsmassen zugänglich sind, die nicht mit dem Nachteil einer hohen Oberflächenklebrigkeit der ausreagierten Massen behaftet sind.

Die Verfasser der DE-OS 1 770 259 haben im übrigen nicht erkannt, daß besonders Mercaptoethanol als Reaktionspartner für das Isocyanatvorpolymerisat besondere Vorteile besitzt und unter bestimmten Voraussetzungen zu besonders gut geeigneten Produkten führt. Es wird vielmehr behauptet, daß die Verwendung von Mercaptoethanol zu Substanzen führt, die nur eine geringe Widerstandsfähigkeit gegen Alkali und Wärme aufweisen (DE-OS 1 770 259, Seite 16).

Wie nunmehr überraschend gefunden wurde, gelingt bei Verwendung ausgewählter Ausgangsmaterialien, nämlich bei Verwendung von 1-Isocyanatomethyl-1,3,3-trimethyl-5-isocyanato-cyclohexan (Isophorondiisocyanat, IPDI) als Diisocyanat, unter Verwendung bestimmter, nachstehend näher beschriebener Polyetherpolyole und unter Verwendung von 2-Mercapto-ethanol die Herstellung von besonders wertvollen, Mercaptogruppen aufweisenden Oligourethanen, die insbesondere die Herstellung lichtechter Beschichtungs- und Dichtungsmassen einer ausgezeichneten Alkali- und Wärmestabilität gestatten.

Gegenstand der Erfindung ist ein Verfahren zur Herstellung von Oligourethanen mit endständigen Mercaptogruppen durch Umsetzung von

a) Diisocyanaten mit
b) unterschüssigen Mengen an Polyetherpolyolen und
c) ca. 0,8–1,1fach äquivalenten Mengen, bezogen auf den sich aus dem zum Einsatz gelangenden Mengenverhältnis von a) und b) ergebenden Überschuß an Isocyanatgruppen einerseits und Hydroxylgruppen andererseits, eines Mercapto-alkanols, dadurch gekennzeichnet, daß man

  a) als Diisocyanat 1-Isocyanatomethyl-1,3,3-trimethyl-5-isocyanato-cyclohexan,
  b) als Polyetherpolyol ein solches eines rechnerischen Molekulargewichts von mindestens 2000 und einer (mittleren) OH-Funktionalität von größer als 2,5 und

c) als Mercapto-alkanol 2-Mercapto-ethanol

verwendet.

Gegenstand der Erfindung ist auch die Verwendung der erfindungsgemäßen Verfahrensprodukte als oxidativ härtbares Bindemittel für Beschichtungs- und Dichtungsmassen sowie die Verwendung der erfindungsgemäßen Verfahrensprodukte als Zusatzmittel für Epoxidharze.

Beim erfindungsgemäßen Verfahren wird als Komponente a), d. h. als Diisocyanat Isophorondiisocyanat eingesetzt.

Bei der Komponente b), d. h. dem Polyetherpolyol handelt es sich um Polyetherpolyole bzw. Gemische von Polyetherpolyolen einer (mittleren) OH-Funktionalität von mindestens 2,5, vorzugsweise von 2,9 bis 4,0 und eines aus der Funktionalität und dem Hydroxylgehalt errechenbaren (mittleren) Molekulargewicht von mindestens 2000, vorzugsweise von 4000 bis 7000. Die Herstellung der Polyetherpolyole bzw. Polyetherpolyolgemische erfolgt in an sich bekannter Weise durch Alkoxylierung von geeigneten Startermolekülen, insbesondere unter Verwendung von Propylenoxid und gegebenenfalls bis zu 50 Mol-%, bezogen auf Gesamtmenge an Alkylenoxid, an Ethylenoxid. Geeignete Startermoleküle, deren Auswahl bzw. Kombination unter Berücksichtigung der obengemachten Ausführungen bezüglich der OH-Funktionalität erfolgt, sind z. B. Wasser, Ethylenglykol, Propandiol-1,2 und -1,3, Butandiol-1,2- und -1,4, Hexandiol-1,6, Trimethylolpropan, Hexantriol, Glycerin, Triethanolamin, Sorbit, Mannit, Sucrose, Ammoniak, Ethylendiamin oder Hexamethylendiamin. Unter Verwendung von Stickstoff aufweisenden Startermolekülen hergestellte tert. Stickstoff aufweisende Polyetherpolyole sind gegenüber den Stickstoff-freien Polyetherpolyolen weniger bevorzugt. Anstelle der Verwendung von Gemischen an Startermolekülen bei der Herstellung der Polyetherpolyole können auch vorab hergestellte Polyetherpolyole abgemischt werden, so daß die Gemische den obengenannten Voraussetzungen bezüglich der mittleren OH-Funktionalität und des mittleren Molekulargewichts entsprechen.

Als Komponente c), d. h. als Mercapto-alkanol, wird beim erfindungsgemäßen Verfahren 2-Mercapto-ethanol eingesetzt.

Bei der Durchführung des erfindungsgemäßen Verfahrens kommen die Rekationspartner in einem NCO/OH-Äquivalentverhältnis, bezogen auf die Komponenten a) und b), von 1,8 : 1 bis 3 : 1, vorzugsweise 1,8 : 1 bis 2,2 : 1 entsprechenden Mengenverhältnissen zum Einsatz. Die Komponente c) wird einer 0,8- bis 1,1fach, vorzugsweise ca. 1fach äquivalenten Menge, bezogen auf den sich aus den Mengenverhältnissen der Komponenten a) und b) ergebenden NCO-Überschuß einerseits und die Hydroxylgruppe der Komponente c) andererseits, eingesetzt.

Zur Durchführung des erfindungsgemäßen Verfahrens können die Komponenten b) und c) vorgemischt und in an sich bekannter Weise mit der Komponente a) zur Reaktion gebracht werden. Bevorzugt ist jedoch eine Ausführungsform des erfindungsgemäßen Verfahrens, gemäß welcher zunächst aus den Komponenten a) und b) in an sich bekannter Weise ein NCO-Präpolymer hergestellt wird, welches in einem zweiten Reaktionsschritt mit der Komponente c) zur Umsetzung gebracht wird.

Beide Varianten des erfindungsgemäßen Verfahrens werden bei einer Reaktionstemperatur von 50 bis 150, vorzugsweise von 90 bis 130°C durchgeführt. Vorzugsweise erfolgen die erfindungsgemäßen Umsetzungen unter einem Schutzgas wie beispielsweise Stickstoff.

Grundsätzlich ist es auch möglich, die bevorzugte Variante des erfindungsgemäßen Verfahrens dergestalt zu modifizieren, daß die Komponente b) in einem ersten Reaktionsschritt mit einem sehr hohen Überschuß der Komponente a) zur Umsetzung des so erhaltenen Umsetzungsprodukts mit der Komponente c) eine destillative Entfernung des überschüssigen Diisocyanats anschließt. Eine derartige Arbeitsweise würde auf ein NCO/OH-Äquivalentverhältnis bezüglich der zwischen a) und b) ablaufenden Reaktion auf 2 : 1 hinauslaufen.

Die erfindungsgemäße Umsetzung kann in Gegenwart von geeigneten inerten Lösungsmitteln durchgeführt werden. Vorzugsweise erfolgt die Umsetzung jedoch in Abwesenheit von Lösungsmitteln. Auch die Verwendung der an sich bekannten, die Isocyanatadditionsreaktion beschleunigenden Katalysatoren ist möglich, jedoch im allgemeinen nicht erforderlich.

Bei den erfindungsgemäßen Verfahrensprodukten handelt es sich um endständige Mercaptogruppen aufweisende Oligourethane eines aus der Art und den Mengenverhältnissen der Ausgangsmaterialien errechenbaren mittleren Molekulargewichts von ca. 2000 bis 10 000, vorzugsweise ca. 4000 bis 8000. Die SH-Funktionalität der erfindungsgemäßen Verfahrensprodukte entspricht der mittleren OH-Funktionalität der Komponente b). Es handelt sich bei den erfindungsgemäßen Verfahrensprodukten im allgemeinen um bei Raumtemperatur viskose Flüssigkeiten bzw. um Substanzen, die bei Raumtemperatur nicht mehr fließfähig sind, sich jedoch leicht mit geeigneten Weichmacherölen zu bei Raumtemperatur fließfähigen Gemischen vereinigen lassen. Für diesen Zweck geeignete Weichmacheröle sind beispielsweise die hierfür üblicherweise eingesetzten Phthalate wie z. B. Dibutylphthalat, Dioctylphthalat, Diisodecylphthalat, Dibenzylphthalat oder Butyl-benzyl-phthalat.

Die erfindungsgemäßen Verfahrensprodukte weisen eine Reihe vorteilhafter Eigenschaften auf: Sie lassen sich, wie gesagt, in verhältnismäßig niedriger Viskosität herstellen bzw. sind sehr leicht in üblichen Weichmachern löslich. In Kombination mit geeigneten Oxidationsmitteln wie Bleidioxid oder Mangandioxid härten sie zu blasenfreien hochmolekularen Kunststoffen aus, die sich im Vergleich zu

den entsprechenden Kunststoffen des Standes der Technik durch eine trockene, nicht blockierende Oberfläche mit hoher Farbtonbeständigkeit auszeichnen, und die darüber hinaus eine ausgezeichnete Widerstandsfähigkeit gegenüber Alkali und Wärme aufweisen. Das gleiche gute Eigenschaftsbild erhält man, wenn man die erfindungsgemäßen Verfahrensprodukte in Kombination mit bekannten Katalysatoren der oxidativen Härtung durch Luftsauerstoff aussetzt. Für dieses Einsatzgebiet geeignete Katalysatoren sind beispielsweise die in den US-Patentschriften 3 991 039 bzw. 4 224 200 beschriebenen Systeme. Besonders gut geeignete Katalysatoren sind jedoch Kombinationen von (i) Dibenzothiazyldisulfid der Formel

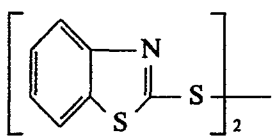

mit (ii) in den erfindungsgemäßen Verfahrensprodukten löslichen Carboxylaten bzw. Enolaten des Mangans, Eisens, Kobalts oder Nickels und (iii) bestimmten organischen Basen.

Geeignete Carboxylate bzw. Enolate (ii) sind beispielsweise die Salze der genannten Metalle mit aliphatischen, cycloaliphatischen oder aromatischen Mono- oder Dicarbonsäuren, wie z. B. die entsprechenden Hexanoate, Octoate, Laurate, Palmitate, Stearate, Benzoate, Phthalate oder Naphthenate oder Enolate der genannten Metalle wie beispielsweise die entsprechenden Acetylacetonate.

Geeignete organische Basen (iii) sind beispielsweise Guanidin und insbesondere substituierte Guanidine, die sich von Guanidin durch Substitution der primären Aminogruppen durch jeweils einen $C_1$—$C_4$-Alkylrest bzw. jeweils einen Phenylrest ableiten, wie beispielsweise N,N'-Dimethylguanidin, N,N'-Dibutylguanidin oder N,N'-Diphenylguanidin und tertiäre Amine des Molekulargewichtsbereichs 79—300 wie Pyridin, N,N-Dimethylanilin, Triethylendiamin oder Urotropin. In den besonders bevorzugten Katalysatorsystemen liegen die Komponenten in solchen Mengenverhältnissen vor, daß auf 1 Gewichtsteil der Komponente (i) 0,02 bis 0,5 Gew.-Teile der Komponente (ii) und 0,05 bis 1,0 Gew.-Teile der Komponente (iii) entfallen. Selbstverständlich können auch Gemische der einzelnen Komponenten verwendet werden.

Bei der erfindungsgemäßen Verwendung der erfindungsgemäß hergestellten Verfahrensprodukte als Bindemittel für durch den Einfluß von Luftsauerstoff härtbare Beschichtungs- und Dichtungsmassen unter Verwendung der zuletztgenannten besonders bevorzugten Katalysatorsysteme können die einzelnen Komponenten (i), (ii) und (iii) dem Bindemittel getrennt oder in vorab abgemischter Form zugesetzt werden. Sowohl im Falle der Verwendung der besonders bevorzugten Katalysatorsysteme als auch bei Verwendung der Katalysatoren gemäß oben aufgezeigtem Stand der Technik werden die Katalysatoren im allgemeinen in einer Menge von 0,01 bis 5 Gew.-%, vorzugsweise 0,5 bis 1,5 Gew.-%, bezogen auf Gesamtgewicht der Katalysatoren einerseits und Gewicht des Bindemittels andererseits, zugesetzt.

Zur Herstellung gebrauchsfertiger Beschichtungs- oder Dichtungsmassen können die erfindungsgemäßen Verfahrensprodukte neben den bereits genannten Komponenten noch weitere Hilfs- und Zusatzmittel wie z. B. Weichmacher der bereits beispielhaft genannten Art, Streckmittel, Lösungsmittel, Füllstoffe, Pigmente, Verdickungsmittel, Alterungsschutzmittel sowie spezielle Zusatzstoffe zur Erzielung bestimmter Eigenschaften, wie beispielsweise Silane zur Verbesserung der Haftungseigenschaften, enthalten. Für die Brandschutz-Ausrüstung können flammhemmende Zusatzstoffe, wie z. B. Aluminiumoxidhydrat, Antimontrioxid oder halogenhaltige Zusatzstoffe wie z. B. PVC-Pulver mitverwendet werden; zur Erhöhung der elektrischen Leitfähigkeit können den Massen beispielsweise Graphit oder Metallpulver einverleibt werden. Der Zusatz von Gummimehl bzw. von Gummigranulat zur Verbilligung und Verbesserung der Abriebeigenschaften ist ebenfalls möglich. Ebenso können Emulgierhilfsmittel zur Dispergierung in Wasser eingesetzt werden.

Die erfindungsgemäß hergestellten Verfahrensprodukte eignen sich als Bindemittel für Dichtungsmassen aller Art, wie sie u. a. im Bauwesen, im Fahrzeug-, Schiffs- und Flugzeugbau oder bei der Herstellung von Isolierglasscheiben zur Abdichtung und Verklebung üblich sind. Die erfindungsgemäßen Verfahrensprodukte eignen sich auch zur Herstellung von Gießharzen, z. B. von Abformmassen und für Vergußmassen auf dem Elektrosektor. Die erfindungsgemäßen Verfahrensprodukte eignen sich auch sehr gut als Bindemittel für Beschichtungsmassen insbesondere zur Herstellung von dickschichtigen Beschichtungen beispielsweise zur Abdichtung von Betonbauwerken, für Dachbeschichtungen oder für abriebfeste Beschichtungen im Fahrzeug- und Schiffsbau.

Bei den erfindungsgemäß hergestellten Verfahrensprodukten handelt es sich, wie ausgeführt, um einkomponentig (Aushärtung durch Einfluß von Luftsauerstoff) verarbeitete, oxidativ härtende Bindemittel für die genannten Einsatzgebiete. Die erfindungsgemäßen Verfahrensprodukte können jedoch auch zweikomponentig verarbeitet werden, wobei als Zweitkomponente beispielsweise Oxidationsmittel der an sich bekannten und oben bereits beispielhaft erläuterten Art oder Epoxidharz, d. h. mindestens zwei Epoxidgruppen aufweisende Polyepoxide, in Betracht kommen. Die erfindungsgemäßen Verfahrensprodukte stellen daher auch wertvolle Zusatzmittel, d. h. insbesondere elastifizierend wirkende Härter für derartige Epoxidharze dar. Die zweikomponentig zu verarbeitenden Systeme eignen

sich praktisch für alle Einsatzgebiete der oben beispielhaft genannten Art.
Die erfindungsgemäßen Verfahrensprodukte können schließlich auch zur Modifizierung von Polybutadienharzen herangezogen werden.
Die nachfolgenden Beispiele dienen zur näheren Erläuterung der Erfindung.

Beispiel 1
(erfindungsgemäß)

6000 g eines Polyethers des mittleren Molgewichts 6000, der durch Alkoxylierung zur Trimethylolpropan erhalten wurde, und dessen Alkylenoxideinheiten sich zu 78 Mol-% aus Propylenoxid und zu 22 Mol-% aus Ethylenoxid zusammensetzen, wird mit 666 g IPDI versetzt und dann unter Stickstoff als Schutzgas bei ca. 100°C zu einem NCO-Prepolymer mit einem NCO-Gehalt von 1,8% umgesetzt. Dann fügt man 222,6 g 2-Mercaptoethanol zu und rührt bei ca. 100°C bis im IR-Spektrum keine NCO-Gruppe mehr zu sehen ist. Man erhält eine klare, praktisch farblose Flüssigkeit mit einer Viskosität von 110 Pas bei 23°C. Das Produkt fließt gut ab und enthält keine Gelteilchen. Es wird zur weiteren Verarbeitung 85%ig in Butyl-benzyl-phthalat aufgelöst.

Beispiel 2
(Vergleich)

Man verfährt wie in Beispiel 1 angegeben und ersetzt IPDI durch 786 g 4,4'-Diisocyanatodicyclohexylmethan. Man erhält ein Produkt, das bei Raumtemperatur nicht mehr flüssig ist, bei erhöhter Temperatur zwar fließt, aber viele Gelteilchen enthält. Es läßt sich auch mit handelsüblichen Weichmachern nicht homogen verdünnen. Deshalb ist eine Verarbeitung zu Dichtstoffen nicht möglich. (Bezüglich der Härte eines unter Verwendung des Produkts oxidativ ausgehärteten Kunststoffen vgl. Beispiel 5.)

Beispiel 3
(Vergleich)

Man verfährt wie in Beispiel 1 angegeben und ersetzt IPDI durch 504 g Hexamethylendiisocyanat. Man erhält eine sehr hochviskose Flüssigkeit mit Gelkörpern, die sich allerdings mit handelsüblichen Weichmachern verdünnen läßt und in eine Form überführen läßt, die eine Verarbeitung gestattet (vgl. nachstehendes Beispiel 8).

Beispiel 4
(Vergleich)

Man verfährt wie in Beispiel 1 angegeben und benutzt aber an Stelle von IPDI 522 g Toluylendiisocyanat (2,4- und 2,6-Isomeres im Verhältnis 80 : 20). Man erhält eine sehr hochviskose Flüssigkeit, die bei 23°C nicht mehr fließt, sich aber mit Dibutylphthalat verdünnen und zu Dichtstoffen verarbeiten läßt (vgl. hierzu Beispiel 9).

Beispiel 5
(Härtung mit Oxidationsmitteln)

Die Produkte der Beispiele 1 und 2 werden jeweils mit den nachstehend angegebenen Mengen der nachstehend genannten Zusatzmittel versetzt. Mit den so hergestellten Zusammensetzungen werden ca. 10 mm dicke Beschichtungen in Polyethylenschalen hergestellt. Die Härte wird nach 48stündiger Lagerung der Formkörper bei 23°C bestimmt. Die Topfzeit der gebrauchsfertigen Mischungen wird ebenfalls angegeben:

| Zusammensetzung | A | B | C | D |
|---|---|---|---|---|
| Produkt aus Beispiel 1 | 100 g | 100 g | – | – |
| Produkt aus Beispiel 2 | – | – | 100 g | 100 g |
| Bleidioxid | 10 g | – | 10 g | – |
| Mangandioxid | – | 12 g | – | 12 g |
| Butylbenzylphthalat | 10 g | 12 g | 10 g | 12 g |
| Wasser | – | 5 g | – | 5 g |
| Topfzeit in Stunden | 3 | 1 | 1 | 1 |
| Shore Härte A der gehärteten Produkte | 50 | 40 | 10 | nicht meßbar |

Beispiel 6
(Härtung durch Einwirkung von Luftsauerstoff)

Es wird wie in Beispiel 5 beschrieben verfahren, wobei jedoch die oxidative Härtung wegen der Abwesenheit von Oxidationsmitteln ausschließlich durch Einwirkung von Luftsauerstoff bewirkt wird. Die Prüflinge werden an der Luft bei 23°C gelagert.

| Zusammensetzung | Beispiel 6a | 6b | 6c | 6d |
|---|---|---|---|---|
| Produkt aus Beispiel 1 | 100 | 100 | 100 | 100 |
| Manganoctoat (6% Mn) | 2 | 2 | 2 | 2 |
| Dibutyldithiocarbamat/Zinksalz | 1 | – | – | – |
| Tetramethylthiuramdisulfid | – | 1 | – | – |
| Dibenzothiacyldisulfid | – | – | 1 | – |
| Dibenzothiacyldisulfid in Kombination mit Diphenylguanidin und Urotropin (Gew.-Verhältnis 70 : 15 : 15) | – | – | – | 1 |
| Hautbildungszeit an der Luft bei 23°C in Minuten | 15 | 20 | 90 | 10 |

Beispiel 7
(Herstellung einer einkomponentig zu verarbeitenden Dichtungsmasse)

Es werden folgende Komponenten zu einer Dichtungsmasse abgemischt:

| | |
|---|---|
| Produkt aus Beispiel 1 | 100 Gew.-Teile |
| Diisodocylphthalat | 100 Gew.-Teile |
| Kreidepulver mit 80 $m^2/g$ Oberfläche | 300 Gew.-Teile |
| Titandioxid | 20 Gew.-Teile |
| Manganoctoat (6% Mn-Gehalt) | 1 Gew.-Teil |
| Katalysator gemäß Beispiel 6d | 1 Gew.-Teil |
| | 522 Gew.-Teile |

Vorgenannte pastöse Mischung ist mindestens 6 Monate lagerfähig und härtet bei Kontakt an der Luft zu einem elastischen Material mit einer Shore Härte von ca. 20. Der Dichtstoff zeichnet sich durch eine trockene Oberfläche aus.

Beispiel 8
(Vergleich der Produkte gemäß Beispiel 1 und 3)

Die Dichtungsmasse gemäß Beispiel 7 wird nachstehend mit einer analogen Dichtungsmasse verglichen, die unter Verwendung des in Beispiel 3 beschriebenen Produkts auf Basis von Hexamethylendiisocyanat hergestellt wurde. Durch Aufrakeln auf Glasplatten werden jeweils Beschichtungen mit einer Schichtdicke von ca. 2 mm hergestellt und an der Luft bei 23°C ausgehärtet. Es wird der Trocknungsgrad gemäß DIN 53 150 bestimmt.

| Dichtstoff unter Verwendung von | Trocknungsgrad gemäß DIN 53 150 |
|---|---|
| Produkt aus Beispiel 1 | 6 |
| Produkt aus Beispiel 3 | 2 |

Beispiel 9
(Vergleich der Produkte gemäß Beispiel 1 und Beispiel 4)

Die Dichtungsmasse gemäß Beispiel 7 wird nachstehend mit einer analogen Dichtungsmasse verglichen, die jedoch unter Verwendung des Produkts aus Beispiel 4 anstelle des Produkts aus Beispiel 1 hergestellt worden war. Die wie in Beispiel 8 beschrieben hergestellten Prüflinge werden einem UV-Test unterzogen. Zunächst werden die Prüflinge während 200 Stunden gemäß DIN 53 389 mit UV-Licht bestrahlt. Anschließend wurde die Vergilbung der Prüflinge gemäß DIN 53 230 beurteilt. Für diese Beurteilung wird eine Bewertungsskala von 1 (unverändert) bis 5 (starke Vergilbung) herangezogen.

| Dichtstoff unter Verwendung von | Anfangswert | Endwert nach 200 Stunden |
|---|---|---|
| Produkt aus Beispiel 1 | 1 | 1 |
| Produkt aus Beispiel 4 | 1 | 3,6 |

Beispiel 10
(Verwendung als Zusatzmittel für Epoxidharze)

Wie nachstehend tabellarisch dargelegt, wird das Produkt gemäß Beispiel 1 mit den angegebenen Mengen eines Epoxidharzes der Formel

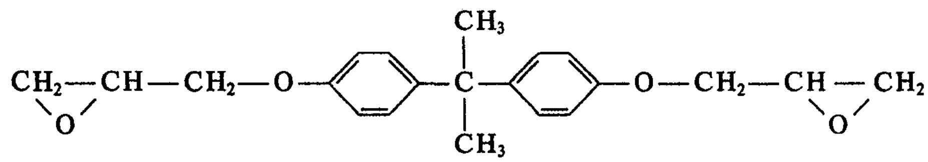

und dem angegebenen Katalysator abgemischt. Mit der so erhaltenen Abmischung werden Formkörper in einer Schichtdicke von 10 mm in Polyethylenschalen hergestellt. Die Prüflinge werden anschließend während 24 Stunden bei 50°C gelagert. Dann wird die Shore-Härte A bestimmt.

| Zusammensetzung | Beispiel 10a | 10b | 10c | 10d |
|---|---|---|---|---|
| Produkt aus Beispiel 1 | 100 | 100 | 100 | 100 |
| Epoxidharz | 30 | 24 | 18 | 12 |
| Trisdimethylaminomethylphenol (Katalysator) | 5 | 5 | 5 | 5 |
| Shore Härte A (nach 24 Stunden bei 50°C) | 51 | 47 | 43 | 16 |

Beispiel 11
(Herstellung einer als Bindemittel für die Herstellung von Isolierglasscheiben geeigneten Dichtungsmasse)

Es werden folgende Komponenten zu einer Dichtungsmasse gemischt:

| | |
|---|---|
| Produkt aus Beispiel 1 | 150 |
| Diisodecylphthalat | 150 |
| 2,2'-Methylen-bis-(4-methyl-6-tert.-butyl-phenol) | 4 |
| als Alterungsschutzmittel Titandioxid | 10 |
| Kreidepulver mit 80 $m^2/g$ Oberfläche | 250 |
| γ-Glycidoxypropyl-trimethoxysilan als Haftmittel | 0,5 |
| Bleidioxid | 15 |
| Wasser | 1,5 |

Bei einer Verarbeitungszeit von ca. 1 Stunde erhärtet die Masse mit einer Shore Härte A von 30. Die Dichtungsmittel zeigen sehr gute Haftungseigenschaften auf Glas und eloxiertem Aluminium, wie es zur Verwendung im Isolierscheibensektor gefordert wird.

## Patentansprüche

1. Verfahren zur Herstellung von Oligourethanen mit endständigen Mercaptogruppen durch Umsetzung von

a) Diisocyanaten mit
b) unterschüssigen Mengen an Polyetherpolyolen und
c) ca. 0,8–1,1fach äquivalenten Mengen, bezogen auf den sich aus dem zum Einsatz gelangenden Mengenverhältnis von a) und b) ergebenden Überschuß an Isocyanatgruppen einerseits und Hydroxylgruppen andererseits, eines Mercapto-alkanols, dadurch gekennzeichnet, daß man

a) als Diisocyanat 1-Isocyanatomethyl-1,3,3-trimethyl-5-isocyanato-cyclohexan,

b) als Polyetherpolyol ein solches eines rechnerischen Molekulargewichts von mindestens 2000 und einer (mittleren) OH-Funktionalität von größer als 2,5 und
c) als Mercapto-alkanol 2-Mercapto-ethanol

verwendet.

2. Verfahren nach Anspruch 1, dadurch gekennzeichnet, daß man zunächst aus den Komponenten a) und b) unter Einhaltung eines NCO/OH-Äquivalentverhältnisses von 1,8 : 1 bis 3 : 1 ein NCO-Prepolymer herstellt und dieses anschließend mit der Komponente c) umsetzt.
3. Verwendung der gemäß Anspruch 1 und 2 erhaltenen Mercaptogruppen aufweisenden Oligourethane als Bindemittel für oxidativ härtbare Beschichtungs- und Dichtungsmassen.
4. Verwendung der gemäß Anspruch 1 und 2 erhaltenen Mercaptogruppen aufweisenden Oligourethane als Zusatzmittel für Epoxidharze.

**Claims**

1. A process for the production of oligourethanes containing terminal mercapto groups by reacting

a) diisocyanates with
b) substoichiometric quantities of polyether polyols and
c) approximately 0.8 to 1.1 times the equivalent quantity of a mercapto alkanol, based on the excess of isocyanate groups arising out of the molar ratio of a) to b) used on the one hand and hydroxyl groups on the other hand, characterized in that

   a) the diisocyanate used is 1-isocyanatomethyl-1,3,3-trimethyl-5-isocyanatocyclohexane,
   b) the polyether polyol used is a polyetherpolyol having a theoretical molecular weight of at least 2000 and an (average) OH-functionality of greater than 2.5 and
   c) the mercapto alkanol used is 2-mercapto ethanol.

2. A process as claimed in Claim 1, characterized in that an NCO-prepolymer is initially prepared from components a) and b) in an NCO/OH equivalent ratio of from 1.8 : 1 to 3 : 1 and is then reacted with component c).
3. The use of the oligourethanes containing mercapto groups obtained in accordance with Claims 1 and 2 as binders for coating and sealing compositions hardenable by oxidation.
4. The use of the oligourethanes obtained in accordance with Claims 1 and 2 as additives for epoxy resins.

**Revendications**

1. Procédé de fabrication d'oligouréthanes avec groupes mercapto terminaux par réaction

a) de diisocyanates avec
b) des quantités déficitaires de polyétherpolyols et
c) des quantités environ 0,8 à 1,1 fois équivalentes, par rapport à l'excès de groupes isocyanate résultant du rapport quantitatif de a) et b) employé, d'une part, et aux groupes hydroxyle, d'autre part, d'un mercapto-alcanol, caractérisé en ce qu'on utilise

   a) comme diisocyanate du 1-isocyanatométhyl-1,3,3-triméthyl-5-isocyanato-cyclohexane,
   b) comme polyétherpolyol un qui possède un poids moléculaire calculé d'au moins 2000 et une fonctionnalité OH (moyenne) supérieure à 2,5 et
   c) comme mercapto-alcanol du 2-mercapto-éthanol.

2. Procédé selon la revendication 1, caractérisé en ce qu'on prépare d'abord à partir des composants a) et b), tout en maintenant un rapport d'équivalence NCO/OH de 1,8 : 1 à 3 : 1, un prépolymère à NCO et l'on fait ensuite réagir celui-ci avec le composant c).
3. Utilisation des oligouréthanes présentant des groupes mercapto obtenus selon les revendications 1 et 2 comme agents liants pour masses de couchage et d'étanchéisation durcissables par oxydation.
4. Utilisation des oligouréthanes présentant des groupes mercapto obtenus selon les revendications 1 et 2 comme additifs pour résines époxy.